# FASCICULE DE BREVET EUROPEEN

(11) **EP 2 453 408 B1**
(45) Date de publication et mention de la délivrance du brevet: **05.06.2013**
(21) Numéro de dépôt: 10306249.3
(22) Date de dépôt: 12.11.2010
(51) Int. Cl.: G06T 7/00

(54) **Procédé de traitement d'images radiologiques pour la détection d'une sténose**
Verarbeitungsverfahren von Röntgenbildern zur Erkennung einer Stenose
Method for processing radiographic images for stenosis detection

(43) Date de publication de la demande: 16.05.2012
(73) Titulaire: General Electric Company, Schenectady, NY 12345 (US)
(72) Inventeur: Vaillant, Régis, 78533 Buc (FR); Gorges, Sébastien, 78533 Buc (FR); Bismuth, Vincent, 78533 Buc (FR)
(74) Mandataire: Regimbeau

(56) Documents cités:
- WO-A1-2005/071595
- BISMUTH V ET AL: "A comparison of line enhancement techniques: applications to guide-wire detection and respiratory motion tracking", PROCEEDINGS OF SPIE, SPIE, USA, vol. 7259, 8 février 2009 (2009-02-08), pages 72591M-1, XP008123733, ISSN: 0277-786X, DOI: DOI:10.1117/12.812241 [extrait le 2009-03-27]
- NICOLAS HONNORAT ET AL: "Robust guidewire segmentation through boosting, clustering and linear programming", BIOMEDICAL IMAGING: FROM NANO TO MACRO, 2010 IEEE INTERNATIONAL SYMPOSIUM ON, IEEE, PISCATAWAY, NJ, USA, 14 avril 2010 (2010-04-14), pages 924-927, XP031693419, ISBN: 978-1-4244-4125-9

## Description

### DOMAINE TECHNIQUE GENERAL

L'invention concerne le domaine de l'imagerie médicale et plus particulièrement celui de la radiologie et trouve application dans le domaine de l'imagerie interventionnelle radiologique vasculaire.

### ETAT DE LA TECHNIQUE

La radiologie interventionnelle vasculaire inclut les actes pratiqués sous contrôle de l'imagerie et permet notamment de traiter l'ischémie myocardique.

L'ischémie myocardique est une maladie qui touche plus d'un tiers des personnes dans les pays développés se traduit par une sténose c'est-à-dire un rétrécissement d'une artère.

Pour traiter cette maladie, plusieurs traitements existent dont la pose de stents intra-coronariens.

Pour cela, un praticien cardiologue utilise l'imagerie interventionnelle qui lui permet la caractérisation des éventuelles lésions et la quantification des artères coronaires et plus particulièrement les sténoses afin de bien choisir les dimensions du stent à introduire.

Un article par Vincent Bismuth et al., "A comparison of line enhancement techniques: applications to guide-wire détection and respiratory motion tracking", PROCEEDINGS OF SPIE, vol. 7259, 8 février 2009, revise plusieurs techniques pour la détection d'objets longilignes dans des images radiographiques pendant une intervention médicale et divulgue un procédé pour estimer le mouvement respiratoire.

Habituellement, le praticien cardiologue utilise une image de la zone comprenant une artère à traiter sur laquelle, manuellement, il positionne plusieurs marqueurs le long de l'artère à traiter pour effectuer une analyse de sténose, c'est-à-dire déterminer l'endroit où se trouve la sténose et déterminer les dimensions du stent nécessaire au traitement de la sténose.

Cette détection et cette quantification nécessitent une interaction du praticien radiologue avec un dispositif d'imagerie médicale et une étape préalable de détection de l'artère à traiter.

Ceci présente les inconvénients que la détection, la quantification prennent du temps et sont difficiles à mettre en oeuvre par le praticien.

### PRESENTATION DE L'INVENTION

L'invention permet de pallier ces inconvénients.

Selon un premier aspect, l'invention concerne un procédé de traitement d'images radiologiques d'une région d'intérêt d'un patient, les images radiologiques étant des images de projection 2D, dans laquelle un outil longiligne a été préalablement inséré dans une artère, le procédé comprenant l'étape suivante : obtention d'au moins un ensemble d'images constitué par une première image et par une seconde image de la région d'intérêt, la première image étant une image de la région d'intérêt dans laquelle un produit de contraste a été préalablement injecté, la seconde image étant une image de la région d'intérêt sans produit ou avec une quantité minimale de produit de contraste, chaque ensemble correspondant à une angulation donnée ; le procédé comprenant, pour chaque ensemble, les étapes suivantes : segmentation de la première image afin de détecter une pluralité d'artères de la région d'intérêt ; segmentation de la seconde image afin de détecter et isoler l'outil ; définition dans la première image segmentée d'une pluralité de lignes, chaque ligne définissant une artère ; détermination, à partir de la seconde image segmentée et des lignes définies, d'une artère d'intérêt correspondant à l'artère dans laquelle l'outil a été inséré, la ligne de l'artère d'intérêt étant la plus proche de l'outil ; application d'un algorithme d'analyse quantitative de lésions coronariennes à l'artère d'intérêt pour détecter une lésion de l'artère d'intérêt.

Grâce à la détection de l'artère d'intérêt, la quantification de la sténose est rendue possible sans avoir à définir manuellement des points le long d'une artère et donc sans interaction avec le système d'imagerie médicale.

Ceci apporte rapidité, simplicité à la mise en oeuvre de la détection de lésions vasculaires.

D'autres aspects du procédé sont les suivants :
- l'application de l'algorithme d'analyse quantitative est réalisée en utilisant des points placés au long de la ligne de l'artère d'intérêt ;
- l'étape de détermination de l'artère d'intérêt consiste à mettre en oeuvre un critère de distance combinant la distance euclidienne d'une ligne d'une artère et une évaluation de la différence d'orientation de l'outil avec cette ligne tout au long de la courbe définissant l'outil longiligne ;

- les lignes définissant les artères sont des lignes centrales définissant chacune un axe de symétrie d'une artère ;
- on obtient au moins deux ensembles d'images, le procédé comprenant, à l'issue de la détermination de l'artère d'intérêt pour chaque ensemble, une étape de reconstruction 3D pour obtenir une image 3D de l'artère d'intérêt ;
- l'algorithme d'analyse quantitative est mis en oeuvre sur l'artère d'intérêt 3D ;
- on obtient une séquence d'ensembles d'images et dans lequel l'identification de l'artère d'intérêt est mise en oeuvre sur chaque artère d'intérêt détectée pour chaque ensemble pour obtenir un champ de mouvement bidimensionnel de la ligne de l'artère d' intérêt ;
- on obtient une pluralité de séquences d'ensembles d'images et dans lequel l'algorithme d'analyse quantitative est mis en oeuvre sur chaque ensemble d'images pour obtenir le champ de mouvement projeté dans l'image de la ligne de l'artère d'intérêt ;
- les images radiologiques obtenues sont des images préalablement acquises et stockées dans une unité mémoire du système d'imagerie médicale.

Selon un second aspect, l'invention concerne un système d'imagerie médicale comprenant des moyens pour la mise en oeuvre du procédé selon le premier aspect de l'invention.

Selon un troisième aspect, l'invention concerne un programme d'ordinateur comprenant des instructions machine pour la mise en oeuvre d'un procédé selon le premier aspect de l'invention.

### PRESENTATION DES FIGURES

D'autres caractéristiques et avantages de l'invention ressortiront encore de la description qui suit laquelle est purement illustrative et non limitative et doit être lue en regard des dessins annexés sur lesquels
- la figure 1 illustre un système d'imagerie médicale conforme à l'invention ;
- la figure 2 illustre schématiquement des étapes du procédé de traitement d'images radiologiques conforme à l'invention ;
- la figure 3 illustre une première image obtenue par le procédé de traitement d'images radiologiques conforme à l'invention ;
- la figure 4 illustre une seconde image obtenue par le procédé de traitement d'images radiologiques conforme à l'invention ;
- la figure 5 illustre schématiquement une artère d'intérêt obtenue au cours du procédé de traitement d'images radiologiques conforme à l'invention.

### DESCRIPTION DETAILLEE DE L'INVENTION

### Système d'imagerie médicale

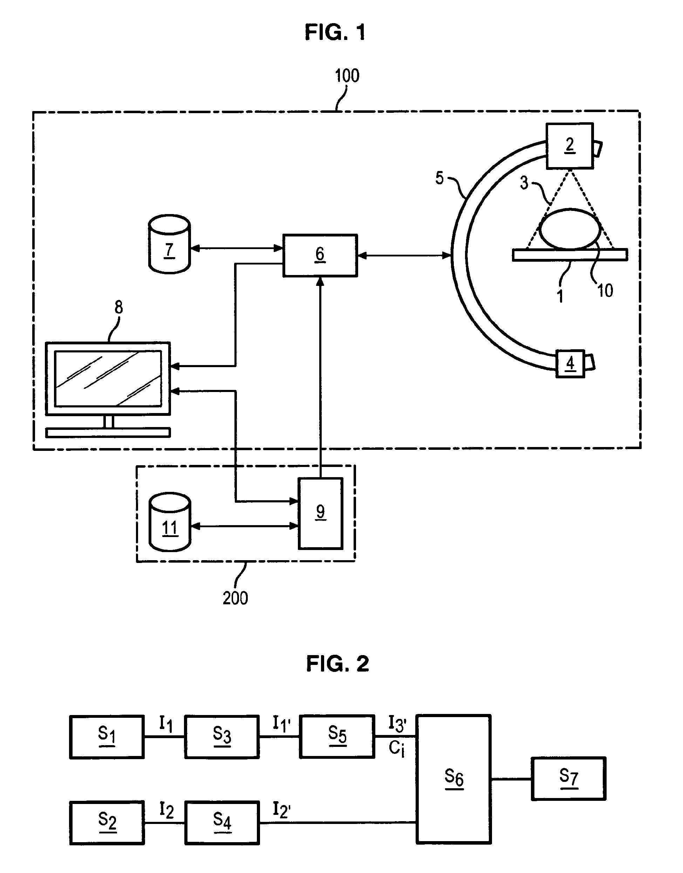

La figure 1 illustre schématiquement un système 100 d'imagerie médicale pour l'acquisition d'images radiologiques.

Le système 100 d'imagerie médicale comprend un support 1 destiné à recevoir un patient 10 à examiner une source 2 destinée à émettre un faisceau 3 de rayons X, un détecteur 4 disposé en face de la source 2 et configuré pour détecter les rayons X émis par la source 2, une unité de commande 6, une unité de stockage 7 et une unité d'affichage 8.

La source 2 de rayons X et le détecteur 4 sont reliés par un bras 5 en forme de C. Un tel bras 5 est plus communément appelé arceau. Le bras 5 peut être orienté selon trois degrés de liberté.

Le détecteur 4 peut être un capteur d'image à semi-conducteurs comprenant, par exemple, du phosphore d'iodure de césium (scintillateur) sur une matrice de transistor/photodiode en silicium amorphe. D'autres détecteurs adéquats sont : un capteur CCD, détecteur numérique direct qui convertit directement les rayons X en signaux numériques. Le détecteur 4 illustré sur la figure 1 est plan et définit une surface plane d'image, d'autres géométries peuvent bien entendu convenir.

L'unité de commande 6 est connectée à l'arceau 5 par connexion filaire ou sans fil. L'unité de commande 6 permet de commander l'acquisition en fixant plusieurs paramètres tels que la dose de radiation à émettre par la source à rayons X et le positionnement angulaire du bras 5. L'unité de commande 6 permet de commander la position du bras 5, c'est-à-dire la position de la source 2 par rapport au détecteur 4.

L'unité de commande 6 peut comprendre un dispositif de lecture (non représenté) par exemple un lecteur de disquettes un lecteur de CD-ROM, DVD-ROM, ou des ports de connexion pour lire les instructions du procédé de traitement d'un support d'instructions (non montré), comme une disquette, un CD-ROM, DVD-ROM, ou clé USB ou de manière plus générale par tout support de mémoire amovible ou encore via une connexion réseau.

L'unité de stockage 7 est connectée à l'unité de commande 6 pour l'enregistrement des paramètres et des images acquises. Il est possible de prévoir que l'unité de stockage 7 est située à l'intérieur de l'unité de commande 6 ou à l'extérieur.

L'unité de stockage 7 peut être formée par un disque dur ou SSD, ou tout autre moyen de stockage amovible et réinscriptible (clés USB, cartes mémoires etc.). L'unité de stockage 7 peut être une mémoire ROM/RAM de l'unité de commande 6, une clé USB, une carte mémoire, une mémoire d'un serveur central.

L'unité d'affichage 8 est connectée à l'unité de commande 6 pour l'affichage des images acquises et/ou d'informations sur les paramètres de commande de l'acquisition.

L'unité d'affichage 8 peut être par exemple un écran d'ordinateur, un moniteur, un écran plat, un écran plasma ou tout autre type de dispositif d'affichage de type connu.

Une telle unité d'affichage 8 permet à un praticien de contrôler l'acquisition des images radiologiques.

Le système d'imagerie médicale 100 est couplé à un système de traitement 200. Le système de traitement 200 comprend une unité de calcul 9 et unité de stockage 10.

Le système de traitement 200 reçoit des images acquises et stockées dans l'unité de stockage 4 du système d'imagerie médicale 100 à partir desquelles il effectue un certain nombre de traitement (voir ci-après).

La transmission des données de l'unité de stockage 4 du système d'imagerie médicale 100 vers l'unité de calcul 9 du système de traitement 200 peut être faite à travers un réseau informatique interne ou externe ou à l'aide de tout support mémoire physique adéquat tel que disquettes, CD-ROM, DVD-ROM, disque dure externe, clé USB, carte SD, etc.

L'unité de calcul 9 est par exemple un/des ordinateur(s), un/des processeur(s), un/des microcontrôleur(s), un/des micro-ordinateur(s), un/des automate(s) programmable(s), un/des circuit(s) intégré(s) spécifique(s) d'application, d'autres circuits programmables, ou d'autres dispositifs qui incluent un ordinateur tel qu'une station de travail.

En variante, le calculateur 9 peut comprendre un dispositif de lecture (non représenté) par exemple un lecteur de disquettes, un lecteur de CD-ROM ou DVD-ROM, ou des ports de connexion pour lire les instructions du procédé de traitement d'un support d'instructions (non montré), comme une disquette, un CD-ROM, un DVD-ROM ou une clé USB ou de manière plus générale par tout support de mémoire amovible ou encore via une connexion réseau.

En outre, le système de traitement comprend une unité de stockage 11 pour le stockage des données générées par l'unité de calcul 9.

L'unité de calcul 9 peut être connectée à l'unité d'affichage 8 (comme sur la figure 1) ou bien à une autre unité d'affichage (non représentée).

### Procédé de traitement d'images radiologiques

On décrit ci-dessous un exemple de réalisation du procédé de traitement d'images radiologiques selon l'invention. La figure 2 illustre schématiquement les étapes du procédé.

### Obtention S1, S2 des première I₁ et seconde I₂ images

Le procédé de traitement d'images radiologiques utilise deux images I₁, I₂ radiologiques d'une région d'intérêt d'un patient, dans laquelle un outil a été préalablement introduit. On considère dans ce qui suit un outil longiligne.

Un tel outil est par exemple un fil guide, un cathéter ou la combinaison de plusieurs d'entre eux. De manière préférée il s'agit du fil guide qui est destiné à faciliter l'introduction d'un stent.

La première image I₁ correspond à une image radiologique de la région d'intérêt dans laquelle un produit de contraste a été injecté. Un tel produit est par exemple de l'iode et la région d'intérêt est typiquement la région coronarienne d'un patient à traiter.

La seconde image I₂ correspond à une image radiologique de la région d'intérêt, sans produit de contraste ou avec une quantité minimale de produit de contraste.

On entend par quantité minimale de produit de contraste, une quantité de produit de contraste qui permet de visualiser l'outil sans qu'il ne soit masqué par les artères.

Les première et seconde images I₁, I₂ peuvent être obtenues au moyen d'acquisition mises en oeuvre au cours du procédé de traitement d'images radiologiques ou bien obtenues à partir d'une unité de stockage du système d'imagerie médicale.

On note que les première et seconde images I₁, I₂ sont issues d'acquisitions mises en oeuvre au moyen du système d'imagerie médicale ci-dessus décrit pour une angulation donnée c'est-à-dire l'orientation de la source à rayons X par rapport à la normale au support sur lequel le patient est disposé.

Les première et seconde images I₁, I₂ sont des images de projection 2D.

Dans la suite de la description on définit un ensemble d'images comme étant le couple constitué par les première et seconde images acquises pour une angulation donnée.

On considère également une séquence d'ensembles d'images c'est-à-dire pour une angulation donnée plusieurs ensembles d'images I₁ I₂ acquis à des instants différents.

### Segmentation S3 de la première image I₁

Cette étape consiste à extraire et isoler, de la première image I₁ et grâce au produit de contraste injecté, les artères du patient.

De manière plus précise, il s'agit du réseau d'artères de la région d'intérêt qui est extrait et isolé.

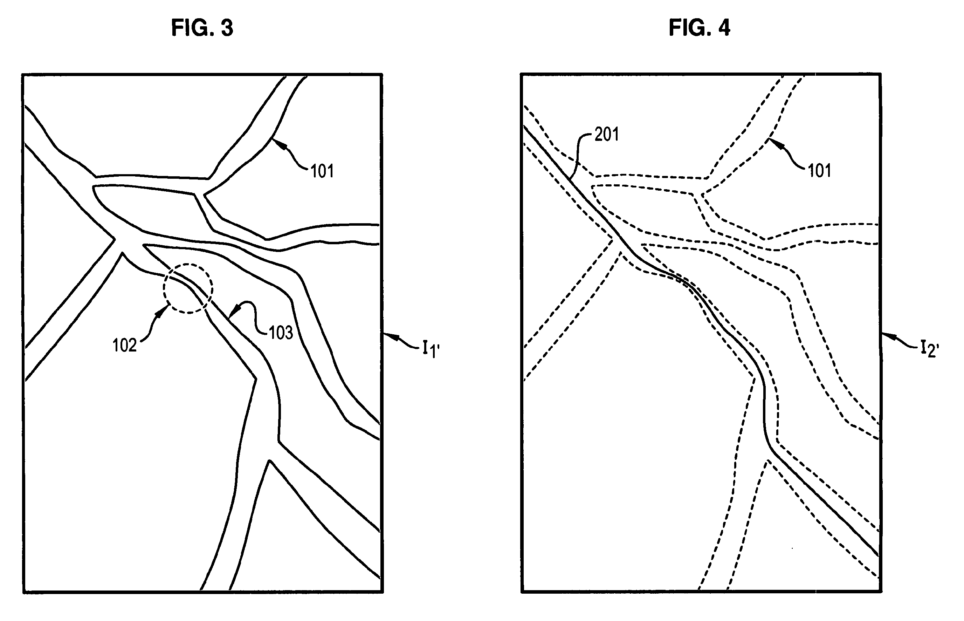

La figure 3 illustre de manière schématique un exemple d'une première image segmentée I₁' comportant un réseau 101 d'artères du patient visualisé, une artère 103 comportant un rétrécissement 102 correspondant à une lésion à détecter.

### Segmentation S4 de la seconde image I₂

Cette étape S4 consiste à extraire et isoler, de la région d'intérêt imagée sans produit de contraste, l'outil inséré dans une artère d'intérêt du patient.

La figure 4 illustre de manière schématique un exemple d'une seconde image segmentée I₂' comportant le même réseau 101 que celui de la première image segmentée I₁' illustré en traits discontinus ainsi qu'un outil 201, ici un fil guide inséré dans une artère du réseau 101 d'artères. En pratique, à l'issue de cette étape de segmentation S4, seul l'outil est visualisé dans l'image I₂', le réseau 101 est représenté ici à titre indicatif.

On note que segmenter une image est une technique bien connue de l'homme du métier et ne sera pas décrite plus en détail.

### Définition S5 des lignes des artères

Cette étape S5 consiste à définir pour chaque artère une ligne Ci, par exemple une ligne centrale définissant un axe de symétrie d'une artère.

La définition des lignes centrales Ci est par exemple mise en oeuvre au moyen d'une technique décrite dans le document Karl Krissian, Grégoire Malandain, Nicholas Ayache, Régis Vaillant et Yves Trousset : « Model-Based Detection of Tubular Structures in 3D Images », Computer Vision and Image Understanding, Vol. 80, num. 2, p. 130-171, 2000.

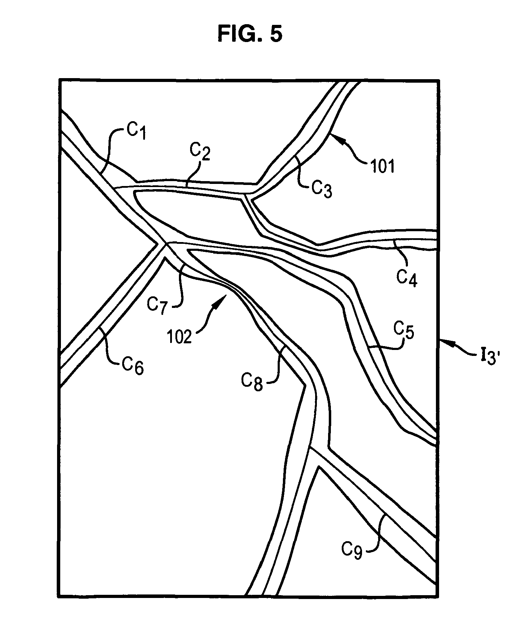

La figure 5 illustre une image I₃' pour laquelle neuf lignes centrales Cᵢ (i=1 à 9) ont été définies dans le réseau d'artères 101.

### Détection S5 de l'artère comprenant l'outil

Cette étape S5 consiste à détecter une artère d'intérêt, c'est-à-dire l'artère dans laquelle l'outil a été inséré.

La détection de l'artère d'intérêt est mise en oeuvre à partir de la seconde image I₂' et à partie de l'image I₃'.

Une telle détection est mise en oeuvre au moyen d'un critère de distance entre l'outil 201 isolé et détecté dans la seconde image segmentée I₂' et les lignes centrales Ci définies.

L'artère d'intérêt correspond à l'artère pour laquelle la distance entre l'outil et la ligne centrale C est minimale.

Il s'agit par exemple d'un critère de distance combinant la distance euclidienne d'une ligne centrale C d'une artère et une évaluation de la différence d'orientation de l'outil avec cette ligne centrale C.

### Détermination S6 d'un éventuel rétrécissement de l'artère d'intérêt

Une fois l'artère d'intérêt dans laquelle l'outil a été inséré est identifiée, on peut procéder à l'analyse quantitative.

Pour ce faire on applique à l'artère d'intérêt un procédé d'analyse quantitative de lésions coronariennes (en anglais, *« Quantitatvie Coronary Analysis* », (QCA)).

Un tel procédé d'analyse est par exemple décrit dans le document Paul L. Van Herck, et al. : « Quantitative Coronary Arteriography on Digital Flat-Panel System », Catheterization and Cardiovascular Interventions, p. 192-200, 2004.

L'analyse QCA se fonde sur un algorithme validé cliniquement pour la détection des contours et permet de déterminer un pourcentage d'occlusion, l'occlusion du diamètre et la taille de l'artère normale et de l'artère présentant une sténose.

En particulier, un tel algorithme analyse l'artère tout au long de la ligne centrale C et en particulier détermine en chaque point de la ligne centrale le diamètre apparent de l'artère. Les variations de ce diamètre et en particulier les diminutions sont des indicateurs de la présence de pathologie comme par exemple une sténose artérielle. La quantification consiste à déterminer une telle diminution par un pourcentage relatif à une zone de diamètre normal.

### Obtention d'une image 3D S8, S8'

Le procédé ci-dessus décrit peut être appliqué à plusieurs images de projection 2D prises pour différentes angulations.

En utilisant une reconstruction 3D de type connue et applicable à des lignes on peut obtenir des lignes 3D qui décrivent la géométrie de l'artère. Plus particulièrement il est possible d'obtenir une vue 3D de l'artère d'intérêt.

On peut appliquer cela à une séquence d'images pour obtenir une séquence d'images 3D et ainsi obtenir les éléments suivants :
- analyse de la projection du mouvement des artères décrit par l'évolution des lignes identifiées dans la séquence d'images ;
- analyse quantitative de la projection des artères dans la succession des images ;
- analyse du mouvement de l'artère dans l'espace tridimensionnel à partir du traitement de plusieurs séquences d'images acquises suivant différentes angulations ;
- analyse quantitative tridimensionnelle et temporelle de l'artère d'intérêt.

### Programme d'ordinateur

Le procédé de traitement d'images radiologiques peut être avantageusement implémenté sous la forme d'un programme d'ordinateur comprenant des instructions machine pour la mise en oeuvre du procédé.

## Revendications

1. Procédé de traitement d'images radiologiques d'une région d'intérêt d'un patient, les images radiologiques étant des images de projection 2D, dans laquelle un outil longiligne a été préalablement inséré dans une artère, le procédé comprenant l'étape suivante :
- obtention (S1, S2) d'au moins un ensemble d'images constitué par une première image (I₁) et par une seconde image (I₂) de la région d'intérêt, la première image (I₁) étant une image de la région d'intérêt dans laquelle un produit de contraste a été préalablement injecté, la seconde image étant une image de la région d'intérêt sans produit ou avec une quantité minimale de produit de contraste, chaque ensemble correspondant à une angulation donnée ;
le procédé comprenant, pour chaque ensemble, les étapes suivantes :
- segmentation (S3) de la première image (I₁) afin de détecter une pluralité d'artères de la région d' intérêt ;
- segmentation (S4) de la seconde image (I₂) afin de détecter et isoler l'outil ;
- définition (S5) dans la première image segmentée d'une pluralité de lignes (Cᵢ), chaque ligne (Cᵢ) définissant une artère ;
- détermination (S6), à partir de la seconde image segmentée et des lignes définies, d'une artère d'intérêt correspondant à l'artère dans laquelle l'outil a été inséré, la ligne (C₇) de l'artère d'intérêt étant la plus proche de l'outil ;
- application (S7) d'un algorithme d'analyse quantitative de lésions coronariennes à l'artère d'intérêt pour détecter une lésion de l'artère d'intérêt.

2. Procédé selon la revendication précédente dans lequel l'application de l'algorithme d'analyse quantitative est réalisée en utilisant des points placés au long de la ligne de l'artère d'intérêt.

3. Procédé selon l'une des revendications précédentes dans lequel l'étape de détermination de l'artère d'intérêt consiste à mettre en oeuvre un critère de distance combinant la distance euclidienne d'une ligne d'une artère et une évaluation de la différence d'orientation de l'outil avec cette ligne tout au long de la courbe définissant l'outil longiligne.

4. Procédé selon l'une des revendications précédentes dans lequel les lignes définissant les artères sont des lignes centrales définissant chacune un axe de symétrie d'une artère.

5. Procédé selon l'une des revendications précédentes dans lequel on obtient au moins deux ensembles d'images (I1, I2), le procédé comprenant, à l'issue de la détermination de l'artère d'intérêt pour chaque ensemble, une étape de reconstruction 3D pour obtenir une image 3D de l'artère d'intérêt.

6. Procédé selon la revendication 5 selon lequel l'algorithme d'analyse quantitative est mis en oeuvre sur l'artère d'intérêt 3D.

7. Procédé selon l'une des revendications 1 à 3 dans lequel on obtient une séquence d'ensembles d'images et dans lequel l'identification de l'artère d'intérêt est mise en oeuvre sur chaque artère d'intérêt détectée pour chaque ensemble pour obtenir un champ de mouvement bidimensionnel de la ligne de l'artère d'intérêt.

8. Procédé selon l'une des revendications 1 à 3 dans lequel on obtient une pluralité de séquences d'ensembles d'images et dans lequel l'algorithme d'analyse quantitative est mis en oeuvre sur chaque ensemble d'images pour obtenir le champ de mouvement projeté dans l'image de la ligne de l'artère d'intérêt.

9. Procédé selon l'une des revendications précédentes dans lequel les images radiologiques obtenues sont des images préalablement acquises et stockées dans une unité mémoire du système d'imagerie médicale.

10. Système d'imagerie médicale comprenant des moyens pour mettre en oeuvre un procédé selon l'une des revendications précédentes.

11. Programme d'ordinateur **caractérisé en ce qu'**il comprend des instructions machine pour la mise en oeuvre d'un procédé selon l'une des revendications 1 à 9 dès lors qu'il est executé par un ordinateur.

## Patentansprüche

1. Verfahren zur Verarbeitung von Strahlenbildern von einem Bereich eines Patienten von Interesse, wobei die Strahlenbilder Bilder zweidimensionaler Projektion sind, in welchen ein längliches Instrument im Vorfeld in eine Arterie eingesetzt wurde, wobei das Verfahren die folgenden Schritte aufweist:
- Erlangung (S1, S2) von zumindest einem Satz Bilder, der durch ein erstes Bild (I₁) und durch ein zweites Bild (I₂) des Bereichs von Interesse gebildet wird, wobei das erste Bild (I₁) ein Bild von dem Bereich von Interesse ist, in welchem ein Kontrastmittel im Vorfeld injiziert wurde, wobei das zweite Bild ein Bild von dem Bereich von Interesse ohne Kontrastmittel oder mit einer minimalen Menge von Kontrastmittel ist, wobei jeder Satz einer vorgegebenen Ausrichtung entspricht;
- wobei das Verfahren für jeden Satz die folgenden Schritte aufweist:
- Segmentierung (S3) des ersten Bildes (I₁), um eine Vielzahl von Arterien des Bereichs von Interesse zu erfassen;
- Segmentierung (S4) des zweiten Bildes (I₂), um das Instrument zu erfassen und zu isolieren;
- Festlegung (S5) einer Vielzahl von Linien (Cᵢ) in dem ersten segmentierten Bild, wobei jede Linie (Cᵢ) eine Arterie festlegt;
- Bestimmung (S6), auf der Grundlage des zweiten segmentierten Bildes und der festgelegten Linien, einer Arterie von Interesse entsprechend einer Arterie, in welcher das Instrument eingesetzt wurde, wobei eine Linie (C₇) der Arterie von Interesse am nächsten zu dem Instrument ist;
- Anwenden (S7) von einem Algorithmus zur quantitativen Analyse von Koronarverletzungen bei der Arterie von Interesse, um eine Verletzung der Arterie von Interesse zu erfassen.

2. Verfahren gemäß dem vorangehenden Anspruch, bei welchem das Anwenden des Algorithmus zur quantitativen Analyse unter Verwendung von entlang der Linie der Arterie von Interesse platzierten Punkten verwirklicht wird.

3. Verfahren gemäß einem der vorangehenden Ansprüche, bei welchem der Schritt der Bestimmung der Arterie von Interesse das Anwenden eines Abstandskriteriums aufweist, das den euklidischen Abstand einer Linie einer Arterie und eine Ermittlung des Ausrichtungsunterschieds des Instruments mit dieser Linie entlang der Kurve, die das längliche Werkzeug festlegt, kombiniert.

4. Verfahren gemäß einem der vorangehenden Ansprüche, bei welchem die die Arterien festlegenden Linien Zentrallinien sind, die jeweils eine Symmetrieachse von einer Arterie festlegen.

5. Verfahren gemäß einem der vorangehenden Ansprüche, wobei zumindest zwei Sätze von Bildern (I1, I2) erlangt werden, wobei das Verfahren nach der Bestimmung der Arterie von Interesse für jeden Satz einen Schritt der dreidimensionalen Rekonstruktion zum Erlangen von einem dreidimensionalen Bild der Arterie von Interesse aufweist.

6. Verfahren gemäß Anspruch 5, wobei der Algorithmus zur quantitativen Analyse an der dreidimensionalen Arterie von Interesse angewandt wird.

7. Verfahren gemäß einem der Ansprüche 1 bis 3, wobei eine Sequenz von Sätzen von Bildern erlangt wird und wobei die Identifikation der Arterie von Interesse an jeder erfassten Arterie von Interesse für jeden Satz angewandt wird, um ein zweidimensionales Bewegungsfeld der Linie der Arterie von Interesse zu erlangen.

8. Verfahren gemäß einem der Ansprüche 1 bis 3, wobei eine Vielzahl von Sequenzen von Sätzen von Bildern erlangt wird und wobei der Algorithmus zur quantitativen Analyse an jedem Satz von Bildern angewandt wird, um das Bewegungsfeld, das in das Bild der Linie der Arterie von Interesse projiziert wird, zu erhalten.

9. Verfahren gemäß einem der vorangehenden Ansprüche, wobei die erhaltenen Strahlenbilder Bilder sind, die im Vorfeld erlangt werden und in einer Speichereinheit des medizinischen Bildgebungssystems gespeichert sind.

10. Medizinisches Bildgebungssystem mit Mitteln zum Durchführen eines Verfahrens gemäß einem der vorangehenden Ansprüche.

11. Computerprogramm, **dadurch gekennzeichnet, dass** es Maschinenanweisungen zur Ausführung eines Verfahrens gemäß einem der Ansprüche 1 bis 9, wenn es von einem Computer ausgeführt werden, aufweist.

## Claims

1. Process for processing radiological images of a region of interest of a patient, the radiological images being 2D projection images, wherein an elongated tool has been previously inserted into an artery, the process comprising the following step:
- obtaining (S1, S2) at least one set of images consisting of a first image (I₁) and a second image (I₂) of the region of interest, the first image (I₁) being an image of the region of interest wherein a contrast medium has been previously injected, the second image being an image of the region of interest without medium or with a minimal quantity of contrast medium, each set corresponding to a given angulation;
the process comprising, for each set, the following steps:
- segmenting (S3) the first image (I₁) to detect a plurality of arteries of the region of interest;
- segmenting (S4) the second image (I₂) to detect and isolate the tool;
- defining (S5) in the segmented first image a plurality of lines (Cᵢ) each line (Cᵢ) defining an artery;
- determining (S6), on the basis of the segmented second image and the lines defined, an artery of interest corresponding to the artery wherein the tool has been inserted, the line (C₇) of the artery of interest being the closest to the tool;
- applying (S7) a quantitative coronary lesion analysis algorithm to the artery of interest to detect a lesion of the artery of interest.

2. Process according to the above claim wherein the quantitative analysis algorithm is applied using points placed along the line of the artery of interest.

3. Process according to any of the above claims wherein the step for determining the artery of interest consists of applying a distance criterion combining the Euclidean distance of a line of an artery and an evaluation of the difference in orientation of the tool with this line along the curve defining the elongated tool.

4. Process according to any of the above claims wherein the lines defining the arteries are central lines each defining an axis of symmetry of an artery.

5. Process according to any of the above claims, wherein at least two sets of images (I1, 12) are obtained, the process comprising, following the determination of the artery of interest for each set, a 3D reconstruction step to obtain a 3D image of the artery of interest.

6. Process according to claim 5 whereby the quantitative analysis algorithm is applied to the 3D artery of interest.

7. Process according to any of claims 1 to 3 wherein a sequence of sets of images is obtained and wherein the identification of the artery of interest is applied to each artery of interest detected for each set to obtain a two-dimensional field of movement of the line of the artery of interest.

8. Process according to any of claims 1 to 3 wherein a plurality of sequences of sets of images are obtained and wherein the quantitative analysis algorithm is applied to each set of images to obtain the projected field of movement in the image of the line of the artery of interest.

9. Process according to any of the above claims wherein the radiological images obtained are images previously acquired and stored in a memory unit of the medical imaging system.

10. Medical imaging system comprising means for applying a process according to any of the above claims.

11. Computer program **characterised in that** it comprises machine instructions for implementing a process according to any of claims 1 to 9, when it is executed by a computer.
